# FASCICULE DE BREVET EUROPEEN

(11) **EP 3 415 372 B1**
(45) Date de publication et mention de la délivrance du brevet: **15.04.2020**
(21) Numéro de dépôt: 18173499.7
(22) Date de dépôt: 22.05.2018
(51) Int. Cl.: B60R 13/04, B62D 25/18

(54) **ENJOLIVEUR DE PASSAGE DE ROUE D'UN VÉHICULE AUTOMOBILE**
ZIERBLENDE FÜR RADKASTEN EINES KRAFTFAHRZEUGS
WHEEL ARCH TRIM OF A MOTOR VEHICLE

(30) Priorité: 15.06.2017 FR 1755439
(43) Date de publication de la demande: 19.12.2018
(73) Titulaire: PSA Automobiles SA, 78300 Poissy (FR)
(72) Inventeur: JAOUEN, Jean Sébastien, 91160 LONGJUMEAU (FR)
(74) Mandataire: Fernandez, Francis Lionel

(56) Documents cités:
- FR-A1- 3 038 286
- JP-A- H10 230 801

## Description

L'invention a trait au domaine de la carrosserie de véhicules automobiles, plus particulièrement au domaine des éléments de protection et d'habillage de carrosserie de véhicules automobiles, et plus particulièrement encore à leur fixation au véhicule. Un garde-boue d'un passage de roue d'un véhicule automobile comprend une paroi, en tôle et/ou en matière plastique, formant une cloison latérale à tendance cylindrique, et délimitant l'espace de rotation de la roue du compartiment moteur et du reste de la carrosserie du véhicule. La portion de carrosserie extérieure s'étendant suivant un profil courbe le long du garde-boue est couramment appelée passage de roue.

Afin d'orner et/ou de renforcer la protection de la carrosserie, des enjoliveurs de passage de roue peuvent être installés sur la carrosserie, et notamment sur les côtés de caisse arrière et les portions de pare-chocs adjacentes, et/ou sur les ailes avant et les portions de pare-chocs adjacentes.

Le document JPH10230801 montre un véhicule selon le préambule des revendications 1 et 9. Le document de brevet publié FR 3 038 286 A1 divulgue un enjoliveur de passage de roue comprenant des moyens de fixation, tels qu'un fût de vis, qui viennent se loger dans des perçages d'un élément de carrosserie intermédiaire et du garde-boue. L'élément intermédiaire de carrosserie est disposé entre l'aile de garde-boue et l'enjoliveur de passage de roue. Une vis permet de fixer l'ensemble par serrage à travers les perçages.

Cet ensemble permet d'assurer une bonne fixation de l'enjoliveur sur l'aile. Cependant, l'enjoliveur étant disposé autour du garde-boue, il est habituellement installé sur différentes parties de la carrosserie. Cette configuration nécessite un positionnement précis de l'enjoliveur sur les zones de fixation, afin d'assurer une résistance à l'usure en adéquation avec ses conditions d'utilisation.

L'invention a pour objectif de pallier au moins un des inconvénients de l'état de la technique susmentionné. Plus particulièrement, l'invention a pour objectif de proposer un enjoliveur pouvant être facilement positionné sur ses zones de fixation, permettant un maintien optimal et résistant.

L'invention a pour objet un véhicule automobile, selon la revendication 1, comprenant : un élément latéral de carrosserie ; une portion de pare-chocs jointive à l'élément latéral de carrosserie, ledit élément et ladite portion formant un passage de roue du véhicule ; et un enjoliveur disposé le long du passage de roue ; remarquable en ce que l'enjoliveur comprend, sur une face de montage dudit enjoliveur sur le passage de roue, une portion en saillie engageant dans une rainure à la jonction entre la portion de pare-chocs et l'élément latéral de carrosserie.

L'élément latéral de carrosserie correspond à une aile avant ou à un côté de caisse arrière, suivant que l'on est à l'avant ou l'arrière, respectivement, du véhicule. Selon un mode avantageux de l'invention, la portion en saillie forme une nervure s'étendant radialement par rapport à la roue. Par radialement, on entend que la nervure s'étend selon une direction radiale de la roue ou selon une direction formant avec une direction radiale de la roue passant par ladite nervure un angle inférieur ou égal à 30°, préférentiellement inférieur à 20°.

Selon un mode avantageux de l'invention, la portion en saillie présente une extrémité saillante engageant un fond de la rainure de manière à assurer un positionnement de l'enjoliveur le long du passage de roue.

Selon un mode avantageux de l'invention, la face de montage de l'enjoliveur comprenant la portion en saillie est en contact avec une face latérale du passage de roue.

Selon un mode avantageux de l'invention, la face de montage de l'enjoliveur comprenant la portion en saillie est fixée au passage de roue au moyen d'adhésif. Selon un mode avantageux de l'invention, la face de montage de l'enjoliveur comprenant la portion en saillie est une première face de montage, l'enjoliveur comprenant une deuxième face de montage formant avec la première face un profil en L et disposée sur une face intérieure du passage de roue. Par face intérieure du passage de roue, on entend que ladite deuxième face de montage de l'enjoliveur est disposée sur une paroi du garde-boue associé au passage de roue.

Selon l'invention, la première face de montage comprend des zones de fixation supplémentaires, se présentant sous la forme de rebords s'étendant intérieurement selon une direction ortho-radiale de la roue, suivant l'arc de courbure de l'enjoliveur. Ces rebords sont des replis de l'enjoliveur vers une face interne. Ces rebords internes sont réalisés au voisinage des zones de l'enjoliveur comprenant une ou des portions en saillie, et sont fixés au moyen d'adhésif.

Selon un mode avantageux de l'invention, l'enjoliveur comprend une première partie disposée sur l'élément latéral de carrosserie et une deuxième partie, jointive à la première, disposée sur la portion de pare-chocs, la portion en saillie étant sur l'une desdites première et deuxième parties.

Selon un mode avantageux de l'invention, la rainure à la jonction entre la portion de pare-chocs et l'élément latéral de carrosserie et la jonction entre les première et deuxième portions de l'enjoliveur sont parallèles et superposées.

L'invention a également pour objet un enjoliveur de passage de roue de véhicule automobile selon la revendication 9.

Il est entendu que les caractéristiques données ci-avant en relation avec le véhicule automobile sont valables pour l'enjoliveur en question.

Selon un mode avantageux de l'invention, l'enjoliveur comprend une première partie destinée à être disposée sur l'élément latéral de carrosserie et une deuxième partie destinée à être disposée sur la portion de pare-chocs, la portion en saillie étant sur l'une desdites première et deuxième parties.

Les mesures de l'invention sont intéressantes en ce que les éléments constitutifs de l'enjoliveur permettent un positionnement et un maintien adaptés à sa fonction de protection. La portion en saillie permet de positionner l'enjoliveur, selon son arc de courbure, au niveau de la portion de pare-chocs jointive à l'élément latéral de carrosserie. L'enjoliveur peut être maintenu par adhésion de sa face de montage au passage de roue. Un appui contre le garde-boue du passage de roue peut en outre améliorer le positionnement radial de l'enjoliveur autour du passage de roue. Enfin, des rebords internes de l'enjoliveur peuvent améliorer le maintien de ses portions, notamment au niveau des zones comprenant une ou des portions en saillie.

D'autres caractéristiques et avantages de la présente invention seront mieux compris à l'aide de la description et des dessins parmi lesquels :
- La figure 1 comprend une vue (a) de l'enjoliveur et une vue en coupe (b) entre l'enjoliveur et un élément de carrosserie ;
- La figure 2 comprend une vue (a) de l'enjoliveur et une vue en coupe (b) entre l'enjoliveur et un élément du garde-boue ;
- La figure 3 comprend une vue (a) de l'enjoliveur et une vue en coupe (b) entre deux portions de l'enjoliveur.

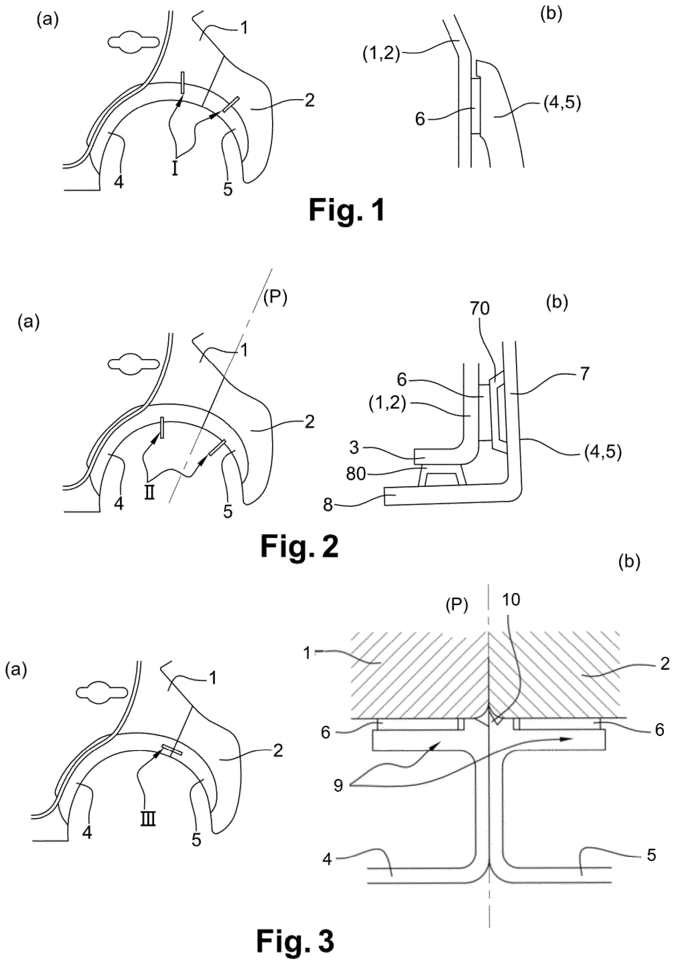

La figure 1(a) est une vue de l'enjoliveur (4, 5) monté sur un passage de roue arrière, côté gauche selon le sens du conducteur, et indique le plan de coupe I réalisé. Il s'agit d'un exemple de configuration possible de l'invention. L'enjoliveur (4, 5) de passage de roue est constitué de deux portions, l'une 4 disposée sur le côté de caisse 1, et l'autre 5 disposée sur le pare-chocs 2 du véhicule.

La figure 1(b) est une vue en coupe selon le plan radial I. La coupe (b) est réalisée au niveau du contact entre l'enjoliveur (4, 5) de passage de roue, et des éléments de la carrosserie (1, 2) formant un passage de roue du véhicule. Les éléments de carrosserie sont constitués d'un élément latéral de carrosserie, notamment un côté de caisse 1, et d'un pare-chocs 2. Le maintien est assuré grâce à un adhésif de fixation 6.

La figure 2(a) est une vue de l'enjoliveur (4, 5) monté sur un passage de roue arrière, côté gauche selon le sens du conducteur : elle indique le plan de coupe II réalisé, ainsi que le plan (P) défini par la zone de contact entre le côté de caisse 1 et le pare-chocs 2.

La figure 2(b) est une vue en coupe selon le plan radial II. La coupe est réalisée au niveau du contact entre l'enjoliveur (4, 5) de passage de roue, des éléments de la carrosserie (1, 2) et le garde-boue 3.

L'enjoliveur (4, 5) comprend une ou des faces de montage (7, 8). Une première face de montage 7 est en contact avec une face latérale du passage de roue. La deuxième face de montage 8 est une portion s'étendant perpendiculairement à la première face de montage 7, et formant un appui local sur le garde-boue 3 du passage de roue. Un élément intermédiaire (70, 80) peut être disposé entre la deuxième face de montage 8 et le garde-boue 3 du passage de roue, ainsi qu'entre la première face de montage 7 et l'adhésif 6, en vue d'améliorer la mise en position. L'adhésif de fixation 6 assure le maintien.

La figure 3(a) est une vue de l'ensemble et indique le plan de coupe III réalisé.

La figure 3(b) est une vue en coupe selon le plan ortho-radial III de l'enjoliveur monté sur un passage de roue arrière, côté gauche selon le sens du conducteur. La figure met en avant les deux portions (4, 5) constituant l'enjoliveur de passage de roue et leur disposition. Chacune des portions présente un rebord 9 s'étendant intérieurement selon une direction ortho-radiale de la roue, préférentiellement suivant l'arc de courbure de l'enjoliveur. Le rebord 9 est un repli de l'enjoliveur vers une face interne. Chacun des rebords internes 9 comprend en outre une zone de fixation, où un adhésif 6 assure le maintien du rebord contre une face latérale du passage de roue et notamment aux environs de la zone de contact entre le côté de caisse 1 et le pare-chocs 2. La figure met également en avant une portion en saillie 10 imbriquée dans la zone de contact entre le côté de caisse et le pare-chocs. La portion en saillie s'étend selon le plan (P) défini par cette zone de contact.

## Revendications

1. Véhicule automobile comprenant :
- un élément latéral de carrosserie (1) ;
- une portion de pare-chocs (2) jointive à l'élément latéral de carrosserie, ledit élément et ladite portion formant un passage de roue du véhicule ; et
- un enjoliveur (4, 5) disposé le long du passage de roue ; l'enjoliveur (4, 5) comprenant, sur une face de montage (7, 8) dudit enjoliveur sur le passage de roue, une portion en saillie (10), **caractérisé en ce que** la portion en saillie engage dans une rainure à la jonction (P) entre la portion de pare-chocs (2) et l'élément latéral de carrosserie (1).

2. Véhicule automobile selon la revendication 1, **caractérisé en ce que** la portion en saillie (10) forme une nervure s'étendant radialement par rapport à la roue.

3. Véhicule automobile selon l'une des revendications 1 et 2, **caractérisé en ce que** la portion en saillie (10) présente une extrémité saillante engageant un fond de la rainure (P) de manière à assurer un positionnement de l'enjoliveur (4, 5) le long du passage de roue.

4. Véhicule automobile selon l'une des revendications 1 à 3, **caractérisé en ce que** la face de montage (7) de l'enjoliveur comprenant la portion en saillie (10) est en contact avec une face latérale du passage de roue.

5. Véhicule automobile selon l'une des revendications 1 à 4, **caractérisé en ce que** la face de montage (7) de l'enjoliveur comprenant la portion en saillie (10) est fixée au passage de roue au moyen d'adhésif (6).

6. Véhicule automobile selon l'une des revendications 1 à 5, **caractérisé en ce que** la face de montage (7) de l'enjoliveur (4, 5) comprenant la portion en saillie (10) est une première face de montage (7), l'enjoliveur comprenant une deuxième face de montage (8) formant avec la première face un profil en L et disposée sur une face intérieure (3) du passage de roue.

7. Véhicule automobile selon l'une des revendications 1 à 6, **caractérisé en ce que** l'enjoliveur (4, 5) comprend une première partie (4) disposée sur l'élément latéral de carrosserie (1) et une deuxième partie (5), jointive à la première, disposée sur la portion de pare-chocs (2), la portion en saillie (10) étant sur l'une desdites première (4) et deuxième parties (5).

8. Véhicule automobile selon la revendication 7, **caractérisé en ce que** la rainure à la jonction (P) entre la portion de pare-chocs (1) et l'élément latéral de carrosserie (2) et la jonction entre les première (4) et deuxième portions (5) de l'enjoliveur (4, 5) sont parallèles et superposées.

9. Enjoliveur (4, 5) de passage de roue de véhicule automobile, ledit enjoliveur présentant un profil arqué ; et comprenant, sur une face de montage (7) dudit enjoliveur sur le passage de roue, une portion en saillie (10), **caractérisé en ce que** l'enjoliveur comprend des zones de fixation supplémentaires (9), se présentant sous la forme de rebords s'étendant intérieurement suivant l'arc de courbure de l'enjoliveur, ces rebords étant des replis de l'enjoliveur vers une face interne, ces rebords internes étant réalisés au voisinage de la zone de l'enjoliveur comprenant la portion en saillie (10), la zone en saillie étant adaptée à engager dans une rainure à une jonction (P) entre une portion de pare-chocs (2) et un élément latéral de carrosserie (1).

10. Enjoliveur selon la revendication 9, **caractérisé en ce qu'**il comprend une première partie (4) destinée à être disposée sur l'élément latéral de carrosserie (1) et une deuxième partie (5) destinée à être disposée sur la portion de pare-chocs (2), la portion en saillie (10) étant sur l'une desdites première (4) et deuxième parties (5).

## Patentansprüche

1. Kraftfahrzeug, umfassend:
- ein seitliches Karosserieelement (1);
- einen Stoßfängerabschnitt (2), der mit dem seitlichen Karosserieelement verbunden ist, wobei das Element und der Abschnitt einen Radkasten des Fahrzeugs bilden; und
- eine Zierblende (4, 5), die entlang des Radkastens angeordnet ist;
wobei die Zierblende (4, 5) auf einer Montagefläche (7, 8) der Zierblende auf dem Radkasten einen vorstehenden Abschnitt (10) umfasst, **dadurch gekennzeichnet, dass** der vorstehende Abschnitt in eine Nut an der Verbindungsstelle (P) zwischen dem Stoßfängerabschnitt (2) und dem seitlichen Karosserieelement (1) eingreift.

2. Kraftfahrzeug nach Anspruch 1, **dadurch gekennzeichnet, dass** der vorstehende Abschnitt (10) eine Rippe bildet, die sich in Bezug auf das Rad radial erstreckt.

3. Kraftfahrzeug nach einem der Ansprüche 1 und 2, **dadurch gekennzeichnet, dass** der vorstehende Abschnitt (10) ein vorspringendes Ende aufweist, das mit einem Boden der Nut (P) in Eingriff steht, um die Positionierung der Zierblende (4, 5) entlang des Radkastens sicherzustellen.

4. Kraftfahrzeug nach einem der Ansprüche 1 bis 3, **dadurch gekennzeichnet, dass** die Montagefläche (7) der Zierblende, die den vorstehenden Abschnitt (10) umfasst, mit einer Seitenfläche des Radkastens in Kontakt steht.

5. Kraftfahrzeug nach einem der Ansprüche 1 bis 4, **dadurch gekennzeichnet, dass** die Montagefläche (7) der Zierblende, die den vorstehenden Abschnitt (10) umfasst, mittels Klebemittel (6) am Radkasten befestigt ist.

6. Kraftfahrzeug nach einem der Ansprüche 1 bis 5, **dadurch gekennzeichnet, dass** die Montagefläche (7) der Zierblende (4, 5), die den vorstehenden Abschnitt (10) umfasst, eine erste Montagefläche (7) ist, wobei die Zierblende eine zweite Montagefläche (8) umfasst, die mit der ersten Fläche ein L-förmiges Profil bildet und auf einer Innenfläche (3) des Radkastens angeordnet ist.

7. Kraftfahrzeug nach einem der Ansprüche 1 bis 6, **dadurch gekennzeichnet, dass** die Zierblende (4, 5) einen ersten Teil (4), der auf dem seitlichen Karosserieelement (1) angeordnet ist, und einen zweiten Teil (5), der mit dem ersten verbunden ist, der auf dem Stoßfängerabschnitt (2) angeordnet ist, umfasst, wobei sich der vorstehende Abschnitt (10) auf einem der ersten (4) und zweiten (5) Teile befindet.

8. Kraftfahrzeug nach Anspruch 7, **dadurch gekennzeichnet, dass** die Nut an der Verbindungsstelle (P) zwischen dem Stoßfängerabschnitt (1) und dem seitlichen Karosserieelement (2) und die Verbindungsstelle zwischen dem ersten (4) und dem zweiten Abschnitt (5) der Zierblende (4, 5) parallel und überlagert sind.

9. Zierblende (4, 5) für einen Radkasten eines Kraftfahrzeugs, wobei die Zierblende ein bogenförmiges Profil aufweist; und auf einer Montagefläche (7) der Zierblende auf dem Radkasten einen vorstehenden Abschnitt (10) umfasst, **dadurch gekennzeichnet, dass** die Zierblende zusätzliche Befestigungsbereiche (9) in Form von Stoßkanten aufweist, die sich innen entlang des Krümmungsbogens der Zierblende erstrecken, wobei diese Stoßkanten Faltungen der Zierblende in Richtung einer Innenfläche sind, wobei diese internen Stoßkanten in der Nähe des Bereichs der Zierblende, die den vorstehenden Abschnitt (10) umfasst, ausgeführt sind, wobei der vorstehende Bereich so angepasst ist, dass er in eine Nut an einer Verbindungsstelle (P) zwischen einem Stoßfängerabschnitt (2) und einem seitlichen Karosserieelement (1) eingreift.

10. Zierblende nach Anspruch 9, **dadurch gekennzeichnet, dass** sie einen ersten Teil (4) umfasst, der dazu bestimmt ist, auf dem seitlichen Karosserieelement (1) angeordnet zu werden, und einen zweiten Teil (5), der dazu bestimmt ist, auf dem Stoßfängerabschnitt (2) angeordnet zu werden, wobei sich der vorstehende Abschnitt (10) auf einem der ersten (4) und zweiten (5) Teile befindet.

## Claims

1. Motor vehicle comprising:
- a lateral bodywork element (1);
- a bumper portion (2) contiguous with the lateral bodywork element, said element and said portion forming a wheel arch of the vehicle; and
- trim (4, 5) disposed along the wheel arch;
the trim (4, 5) comprising, on a face (7, 8) by which said trim is mounted on the wheel arch, a projecting portion (10), **characterised in that** the projecting portion engages in a groove at the junction (P) between the bumper portion (2) and the lateral bodywork element (1).

2. Motor vehicle according to claim 1, **characterised in that** the projecting portion (10) forms a rib extending radially with respect to the wheel.

3. Motor vehicle according to either claim 1 or claim 2, **characterised in that** the projecting portion (10) has a projecting end engaging a bottom of the groove (P) so as to provide positioning of the trim (4, 5) along the wheel arch.

4. Motor vehicle according to any of claims 1 to 3, **characterised in that** the mounting face (7) of the trim comprising the projecting portion (10) is in contact with a lateral face of the wheel arch.

5. Motor vehicle according to any of claims 1 to 4, **characterised in that** the mounting face (7) of the trim comprising the projecting portion (10) is fixed to the wheel arch by means of adhesive (6).

6. Motor vehicle according to any of claims 1 to 5, **characterised in that** the mounting face (7) of the trim (4, 5) comprising the projecting portion (10) is a first mounting face (7), the trim comprising a second mounting face (8) forming with the first face an L-shaped profile and disposed on an inside face (3) of the wheel arch.

7. Motor vehicle according to any of claims 1 to 6, **characterised in that** the trim (4, 5) comprises a first part (4) disposed on the lateral bodywork element (1) and a second part (5), contiguous with the first, disposed on the bumper portion (2), the projecting portion (10) being on one of said first (4) and second parts (5).

8. Motor vehicle according to claim 7, **characterised in that** the groove at the junction (P) between the bumper portion (1) and the lateral bodywork element (2) and the junction between the first (4) and second portions (5) of the trim (4, 5) are parallel and placed one on top of the other.

9. Motor-vehicle wheel-passage trim (4, 5), said trim having an arched profile; and comprising, on a face (7) by which said trim is mounted on the wheel arch, a projecting portion (10), **characterised in that** the trim comprises supplementary fixing zones (9), in the form of rims extending internally along the curvature arc of the trim, these rims being folded from the trim towards an inner face, these inner rims being produced in the vicinity of the zone of the trim comprising the projecting portion (10), the projecting zone being suitable for engaging in a groove at a junction (P) between a bumper portion (2) and a lateral bodywork element (1).

10. Trim according to claim 9, **characterised in that** it comprises a first part (4) intended to be disposed on the lateral bodywork element (1) and a second part (5) intended to be disposed on the bumper portion (2), the projecting portion (10) being on one of said first (4) and second parts (5).
